# EUROPÄISCHE PATENTANMELDUNG

(11) **EP 3 657 284 A1**
(43) Veröffentlichungstag der Anmeldung: **27.05.2020**
(21) Anmeldenummer: 18207726.3
(22) Anmeldetag: 22.11.2018
(51) Int. Cl.: G05B 19/418, G05B 19/4099, B29C 67/00

(54) **VERFAHREN FÜR EIN AUTOMATISIERTES MATERIALMANAGEMENT**

(71) Anmelder: Siemens Aktiengesellschaft, 80333 München (DE)
(72) Erfinder: Dallmann, Michael, 90530 Wendelstein (DE)

(57) **Zusammenfassung**

Die Erfindung ist ein Verfahren für ein automatisiertes Materialmanagement, wobei im Rahmen eines Produktionsprozesses (12) Daten erfasst und in einer Datenbasis (20) gespeichert werden, wobei mittels eines Prozessbilds (10) einzelne von dem Produktionsprozess (12) umfasste Einheiten (14, 18) angezeigt werden und die Darstellung Mengen- und/oder Zustandsinformationen umfasst und wobei die Erfassung der Daten und die Darstellung des oder jedes Prozessbilds (10) mittels eines SCADA-Systems (22) erfolgt.

## Beschreibung

Die Erfindung betrifft ein Verfahren für ein automatisiertes Materialmanagement und im Weiteren eine auf dem Materialmanagement basierende Werkerführung. Als Werkerführung wird dabei eine sich automatisch im Rahmen des Materialmanagements ergebende Folge von Handlungsanweisungen für das mit der Bereitstellung und Zuführung von Material zu einem automatisierten oder teilautomatisierten Prozess (Materialmanagement) befasste Personal (Werker) verstanden.

Die Erfindung bezieht sich vornehmlich auf ein Verfahren für ein automatisiertes Materialmanagement bei sogenannten additiven Fertigungsverfahren (additive manufacturing; AM), insbesondere beim sogenannten selektiven Laserschmelzen (selective laser melting; SLM) oder beim sogenannten selektiven Lasersintern (selective laser sintering; SLS).

Additive Fertigungsverfahren benötigen grundsätzlich ein Materialmanagement in ähnlicher Art und Weise wie in der chemischen Industrie zum Abarbeiten und Verwalten von Chargen im Rahmen des Produktionsprozesses und zum Verwalten sogenannter Genealogien, wobei eine Genealogie die Historie beschreibt, wie sich Materialien zusammengesetzt haben. Beispielsweise wird festgehalten zu welchem Anteil eine erste Charge mit einer zweiten Charge gemischt wurde. Wird im Folgenden bei einem Teil der Menge eine dritte hinzugefügt, wird für diesen Teil ebenfalls der Anteil festgehalten, so dass nachvollziehbar ist, aus welchen Bestandteilen eine Materialmenge besteht. Zusätzlich müssen alle Aktivitäten aufgezeichnet und protokolliert werden. Dabei wird beim selektiven Laserschmelzen (SLM) zum Beispiel erfasst, welche CAM-Datei für den Druckjob verwendet wurde, welcher Beschichter (coater) verwendet wurde, welche Charge für welchen Druckjob verwendet wurde und so weiter. Speziell beim selektiven Laserschmelzen (SLM) ist im Anschluss an den eigentlichen Druckjob umfangreiches Nacharbeiten (post-processing) notwendig, zum Beispiel Wärmebehandlung, Entfernen von Stützstrukturen, Oberflächenbehandlung und Qualitätssicherung.

Unternehmen, die mit einem additiven Fertigungsverfahren, wie beispielsweise selektivem Laserschmelzen (SLM), beginnen, haben üblicherweise bereits Erfahrung mit subtraktiven Fertigungsverfahren und verfügen über eine entsprechende Ausrüstung. Diese soll üblicherweise weiterverwendet werden. Dies kommt zum Beispiel für Fräsmaschinen (milling machines) für das Postprocessing in Betracht. Solche Geräte werden oft im Rahmen eines subtraktiven Fertigungsverfahrens mittels eines ERP-Systems (enterprise resource planning) gesteuert und/oder überwacht. Ein MES-System (manufacturing execution system) zur Produktionssteuerung wird eher selten verwendet. Eine ähnliche Situation ergibt sich für kleinere und mittlere Unternehmen.

Unter solchen Randbedingungen wird für eine Verwaltung des Druckprozesses im Rahmen eines additiven Fertigungsverfahrens eine Lösung benötigt, welche die Verwendung der dabei zum Einsatz kommenden Geräte in bestehende Produktionslinien ohne die Notwendigkeit einer Einführung eines MES-Systems erlaubt. Eine Einführung eines MES-Systems würde erfordern, dass auch bei einem parallel oder alternierend laufenden subtraktiven Fertigungsverfahren zu einem MES-System gewechselt wird, da beide Verfahren die gleichen Geräte zum Postprocessing verwenden und diese aber nur von einem System für die Produktion verplant und überwacht werden können. Eine solche Einführung eines MES-Systems ist teuer und aufwändig, da alle existierenden Produktionsprozesse umgestellt werden müssen.

Bei den eingangs genannten Geräten handelt es sich vor allem um im Folgenden kurz als Drucker bezeichnete sogenannte 3D-Drucker, welche speziell für das jeweilige Fertigungsverfahren eingerichtet sind, welche also insbesondere einen Laser zum Schmelzen des pulverförmig zugeführten Ausgangsstoffs, zum Beispiel Aluminium, Titanium oder dergleichen, aufweisen. Bei solchen Geräten besteht bezüglich einer Integration in ein automatisiertes Materialmanagement der hier vorgeschlagenen Art das Problem, dass diese über keine standardisierten Schnittstellen verfügen. Folglich wäre bisher eine Integration eines solchen Druckers in ein MES-System für jeden Druckertyp einzeln vorzunehmen.

Eine Aufgabe der vorliegenden Erfindung besteht ausgehend davon darin, eine Lösung anzugeben, welche eine Verwendung grundsätzlich beliebiger Drucker in einer einfachen und kostensparenden Art und Weise erlaubt und in ein bestehendes ERP-System integriert werden kann.

Diese Aufgabe wird mittels eines Verfahrens für ein automatisiertes Materialmanagement bei einem additiven Fertigungsverfahren (Produktionsprozess), insbesondere beim selektiven Laserschmelzen (SLM) oder beim sogenannten selektiven Lasersintern (SLS), mit den Merkmalen des Anspruchs 1 gelöst. Danach ist vorgesehen, dass im Rahmen des Produktionsprozesses Daten bei vom Produktionsprozess umfassten Einheiten, zum Beispiel 3D-Drucker zum selektiven Laserschmelzen oder Lasersintern, erfasst und in einer Datenbasis gespeichert werden, dass mittels zumindest eines Prozessbilds zumindest einzelne von dem Produktionsprozess umfasste Einheiten in Form graphischer Repräsentanten dieser Einheiten angezeigt werden und dass die graphischen Repräsentanten eine Darstellung einer aus dem Produktionsprozess stammenden Mengeninformation und/oder eine Darstellung einer aus dem Produktionsprozess stammenden Zustandsinformation umfassen, wobei die Mengen- und/oder Zustandsinformation(en) die im Produktionsprozess erfassten Daten sind oder sich aus diesen ergeben. Die Besonderheit besteht darin, dass die Erfassung der Daten und die Darstellung des oder jedes Prozessbilds mittels eines SCADA-Systems (supervisory control and data acquisition) erfolgt.

Indem das Prozessbild oder zumindest ein Prozessbild eine Darstellung von aus dem Produktionsprozess stammenden Mengeninformationen und/oder eine Darstellung von aus dem Produktionsprozess stammenden Zustandsinformationen umfasst, gibt das Prozessbild unmittelbar Auskunft über im Rahmen des Produktionsprozesses verwendete, verbrauchte und/oder entstehende Materialmengen. Das Prozessbild liefert also Informationen zum Materialmanagement. Die Darstellung des zumindest einen solche Informationen umfassenden Prozessbilds kann mittels eines SCADA-Systems besonders einfach und komfortabel erfolgen.

Der hier vorgeschlagene Ansatz ist damit auch die Verwendung eines SCADA-Systems als Basis für eine Erfassung von für ein Materialmanagement eines Produktionsprozesses relevanten Daten und als Basis für eine Darstellung dieser Daten in Form von zumindest einem Prozessbild.

Ein Vorteil des hier vorgeschlagenen Ansatzes besteht darin, dass durch die Verwendung eines SCADA-Systems als Basis das Materialmanagement und eine darauf basierende Werkerführung für einen Drucker direkt von einem jeweiligen Druckerhersteller angeboten werden kann. Das Materialmanagement bietet nicht nur Funktionen sondern auch eigenständige Dialoge und Dialogelemente auf SCADA-Basis an, die dann wiederum in SCADA-Dialoge der Drucker einbindbar sind. Das SCADA-System kapselt alle AM-spezifischen Funktionen und Geräte für den Druckprozess dergestalt, dass eine Einbindung der Funktionen und Geräte über das SCADA-System über Schnittstelle zu einem ERP-System erfolgen kann.

Alle für einen Druckprozess notwendigen spezifischen Prozesse (Druck, Pulververwaltung, Recycling, etc.) werden mit Hilfe eines SCADA-basierten Systems verwaltet und gekapselt. Dieses klinkt sich in das ERP-System so ein, dass sich das ERP-System um diese Besonderheiten nicht kümmern muss (zum Beispiel um eine Verwaltung der Materialcontainer und der Chargen). Es werden aber alle notwendigen Informationen (zum Beispiel zum Nachbestellen von Material) zur Verfügung gestellt.

Um die Integration zu vereinfachen, wird dazu ein Materialmanagement eingeführt, welches nicht nur Funktionen wie das Umbuchen von Containerinhalten bereitstellt, sondern auch Dialoge, die in andere Systeme einbindbar sind. Die Kammern der Drucker werden dabei ebenfalls als Container angesehen. Eine Werkerführung verwendet dann diese Funktionen und Dialoge. Damit sind nur noch druckerspezifische Features in der Werkerführung separat zu behandeln, nicht aber der Kernprozess, welcher festlegt, wie mit Material umzugehen ist, wann Laborprüfungen erfolgen sollen, etc. Der Entwicklungsaufwand für die Integration reduziert sich dadurch erheblich.

Ein SCADA-System wird aus zwei Gründen als Basis für den hier vorgeschlagenen Ansatz verwendet: Zum Einen liefert jeder Hersteller bereits ein Bedien- und Beobachtungssystem für den Drucker mit, wobei diese teilweise bereits SCADA-Funktionen abdecken (zum Beispiel eine sogenannte Überwachung von Linien). Damit besteht eine Möglichkeit für einen OEM eine solche Funktion zusätzlich anzubieten und dabei die druckerspezifischen Anteile einer Werkerführung für ihre Maschine mitliefern. Bei einem komplexen MES-System ist dies bisher von OEMs nicht unterstützt worden. Zum Anderen ermöglicht ein SCADA-System eine Verwaltung von Prozessdaten oder dergleichen bei intelligenten Einheiten (zum Beispiel Druckern oder Bearbeitungsstationen), die in Dialogen verwendet werden können. Zurzeit weisen die meisten Container keine Intelligenz auf, d.h. es gibt keine Schnittstellen, um beispielsweise Inhalte auszulesen. Es gibt aber Drucker, bei denen der Bauraum austauschbar ist, und wo diese Einheit durchaus Daten melden kann, welche eine Identifikation erlauben und einen jeweiligen Inhalt kodieren. Dies sind noch Ausnahmefälle. Es besteht aber eine Tendenz in Zukunft solche Systeme für automatisierte Druckprozesse einzusetzen. In dem Fall kann das SCADA-System direkt mit der jeweiligen Einheit kommunizieren und Daten austauschen. Wenn also aktuell ein SCADA-System verwendet wird, um Container manuell zu verwalten, besteht eine Option, intelligente Container später in der gleichen Art und Weise (aus Nutzersicht) einzubinden.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens knüpft an eine Änderung einer Mengeninformation und/oder an eine Änderung einer Zustandsinformation eine Folgedarstellung an, nämlich eine Folgedarstellung in dem momentan angezeigten Prozessbild oder ein als Folgedarstellung fungierendes und anstelle des bisher angezeigten Prozessbilds weiteres Prozessbild. Eine solche Folgedarstellung ermöglicht eine besonders anschauliche und intuitiv verständliche Werkerführung. Beispielsweise kann in einem Prozessbild ein leer gewordener Container oder ein leer werdender Container graphisch hervorgehoben angezeigt werden. Der Füllstand des Containers oder der Füllzustand des Containers ergibt sich aufgrund einer unmittelbar oder mittelbar aus dem Produktionsprozess stammenden Mengen- bzw. Zustandsinformation. Ein Prozessbild mit einer solchen graphischen Hervorhebung ist eine Folgedarstellung. Wenn sich die Anzahl und die Position der von dem Prozessbild umfassten Einzelheiten dabei nicht ändern, handelt es sich um eine Folgedarstellung in dem bisher angezeigten Prozessbild. Das Prozessbild/die Folgedarstellung zeigt dem Werker den jeweiligen Container genau an. Der Werker weiß also genau, um welchen Container er sich kümmern muss (Werkerführung). Anstelle einer Folgedarstellung in einem bisher angezeigten Prozessbild kommt auch eine Folgedarstellung in Form eines weiteren Prozessbilds in Betracht, welches dann als Folgedarstellung anstelle des bisherigen Prozessbilds angezeigt wird. Eine solche Folgedarstellung kann zum Beispiel ebenfalls den jeweiligen Container hervorgehoben anzeigen und zusätzlich ein Materiallager anzeigen, aus dem sich der Container neu befüllen lässt. Der Werker weiß damit genau, wo der zum Befüllen des Containers vorgesehene Ausgangsstoff gelagert ist (Werkerführung) .

Der hier vorgeschlagene Ansatz der Verwendung zumindest eines Prozessbilds zum Materialmanagement und/oder zur Werkerführung ermöglicht zum Beispiel einem Gerätehersteller eine Erstellung zumindest eines Prozessbilds eines jeweiligen Geräts, zum Beispiel eines Druckers zum selektiven Laserschmelzen (SLM) oder eines Druckers zum selektiven Lasersintern (SLS). Ein solches Prozessbild kann beim Erstellen einer Automatisierungslösung für einen konkreten Produktionsprozess, zum Beispiel einem Produktionsprozess mit zumindest einem derartigen Drucker, als Dialogelement (vorgefertigter Subdialog) für ein bei der Automatisierung des Produktionsprozesses verwendetes Prozessbild verwendet werden. Der für das Erstellen der Automatisierungslösung verantwortliche Automatisierungsingenieur braucht sich demnach um Spezifika des jeweiligen Geräts und/oder Spezifika bei dessen Bedienung nicht kümmern, denn diese sind bereits in dem extern zur Verfügung gestellten Prozessbild enthalten.

Bei einem Verfahren zum Erstellen einer Werkerführung für einen Produktionsprozess, zum Beispiel einem Verfahren zum Erstellen einer Werkerführung für einen selektives Lasersintern und/oder selektives Laserschmelzen umfassenden Produktionsprozesses, ist insoweit vorteilhaft vorgesehen, dass einem Automatisierungsingenieur für zumindest eine von dem Produktionsprozess umfasste Einheit ein Dialogelement der oben skizzierten Art für ein Prozessbild zur Darstellung dieser Einheit zur Verfügung steht (zum Beispiel indem der Hersteller der Einheit dieses anbietet) und dass der mit dem Erstellen der Automatisierungslösung betraute Automatisierungsingenieur das Dialogelement als Prozessbild für eine Darstellung der jeweiligen Einheit im Rahmen des Produktionsprozesses in ein SCADA-System übernimmt und das Prozessbild in dem SCADA-System mit Datenpunkten des Produktionsprozesses verknüpft.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein abstraktes Prozessbild,
- FIG 2: von einem Prozessbild umfasste graphische Repräsentanten realer Einheiten oder realer Ausgangsstoffe,
- FIG 3: das Prozessbild sowie reale Einheiten und Ausgangsstoffe eines Produktionsprozesses und eine Kommunikationsschnittstelle als Abstraktionsschicht des Prozessbilds zum Produktionsprozess,
- FIG 4: ein konkretes Prozessbild,

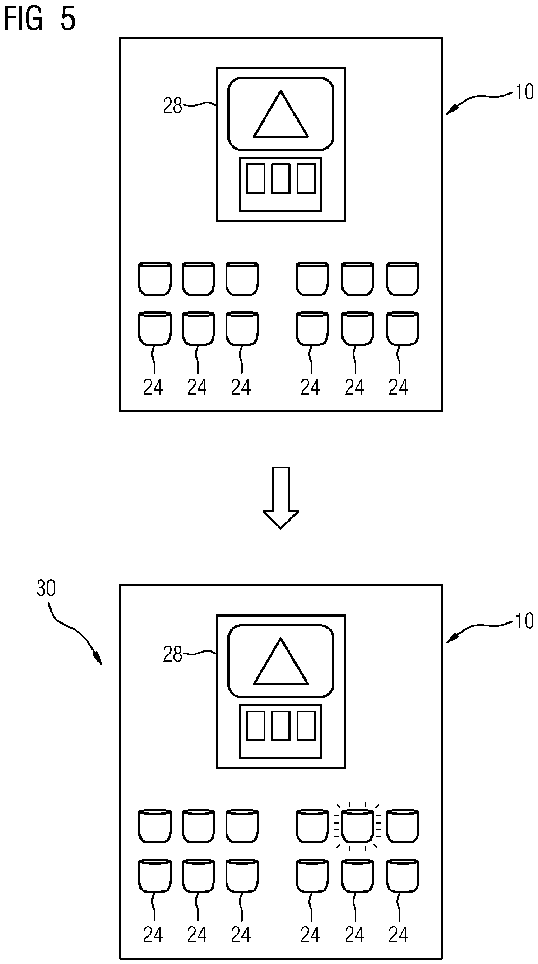

- FIG 5: das Prozessbild gemäß FIG 4 und eine damit verknüpfte Folgedarstellung sowie
- FIG 6: ein im Rahmen einer Erstellung einer Automatisierungslösung für einen Produktionsprozess auf Basis von vorgefertigten Subdialogen (frames) entstehendes Prozessbild.

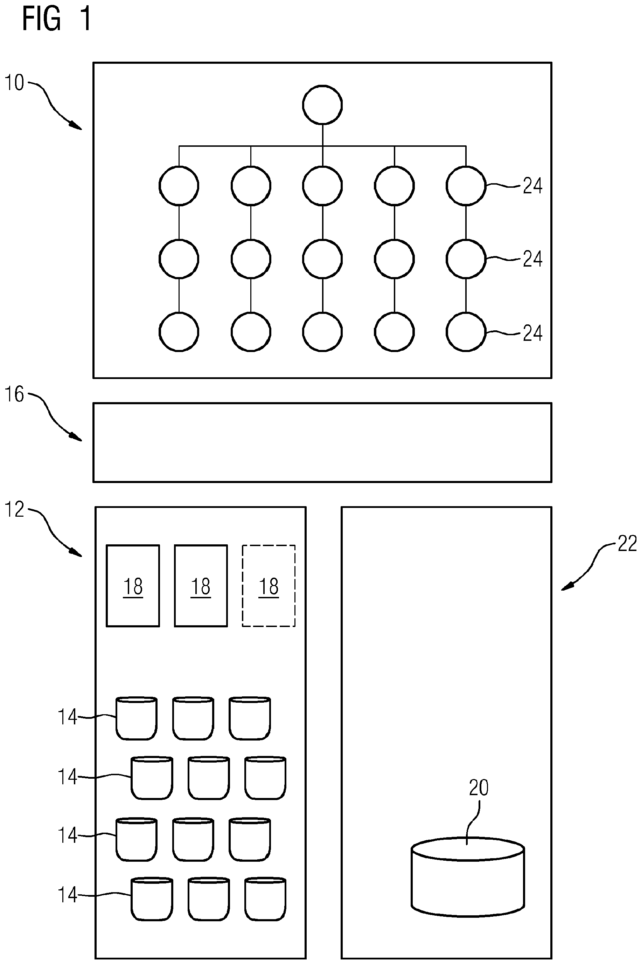

FIG 1 zeigt ein Prozessbild (process image) 10 für einen SLM/SLS-Prozess 12. Das Prozessbild 10, also eine elektronische Visualisierung des SLM/SLS-Prozesses 12, basiert auf zumindest einem im Rahmen des SLM/SLS-Prozesses 12 verwendeten Ausgangsstoff, also zum Beispiel Aluminiumpulver, Titaniumpulver und dergleichen. Solche Ausgangsstoffe werden in sogenannten Containern 14 bereitgehalten und die einzelnen Elemente des Prozessbilds 10 stellen einzelne Container 14 dar, welche mit ihrem Inhalt für die Produktion einzelner Werkstücke nach dem SLM- oder SLS-Verfahren benötigt werden.

Ein solches Prozessbild 10 repräsentiert bei einer Realisierung in einem - grundsätzlich an sich bekannten - sogenannten SCADA-System (supervisory control and data acquisition) einzelne zu dem jeweiligen Prozess 12 gehörige Geräte und Einheiten, umfasst Prozesswerte, also zum Beispiel Messwerte, und Prozesszustände und benutzt eine Kommunikationsschnittstelle (communication interface) 16 einerseits zu den physikalischen Geräten und Einheiten im jeweiligen Prozess 12, also zum Beispiel zu zumindest einem Drucker 18, und andererseits zu einer persistenten, ggf. verteilten Datenbasis 20. Die Datenbasis 20 zusammen mit einer - in grundsätzlich an sich bekannter Art und Weise zu dem SCADA-System gehörenden - Datenbankanwendung 22 bildet das Rückgrat des hier vorgeschlagenen Materialmanagements. Im Folgenden wird die Bezugsziffer der Datenbankanwendung 22 - ohne Verzicht auf eine weitergehende Allgemeingültigkeit - auch für das SCADA-System 22 und eine grundsätzlich an sich bekannte Hardware zu dessen Ausführung verwendet.

Beim manuellen Handling von physikalischen Containern 14 mit Ausgangsstoffen für den Produktionsprozess 12 durch einen für den Prozess 12 verantwortlichen Werker werden unterschiedliche Container 14 mit gegebenenfalls unterschiedlichen Ausgangsstoffen in einem Lagerbereich vorgehalten. Üblicherweise werden in einem ersten Lagerbereich Container 14 mit einem ersten Ausgangsstoff und in einem anderen Lagerbereich Container 14 mit einem anderen Ausgangsstoff und so weiter vorgehalten. Die Container 14 sind mit einer Kennzeichnung, also zum Beispiel einer Aufschrift oder einem Aufkleber, versehen, welche bzw. welcher den in dem Container 14 enthaltenen Ausgangsstoff, die Menge des jeweiligen Ausgangsstoffs, ein Taragewicht und eine Angabe bezüglich derjenigen Charge, in welcher der Container 14 zu verwenden ist (Batch ID), umfasst. Der Werker kann somit durch Lesen einer jeweiligen Kennzeichnung erkennen, welcher Ausgangsstoff in einem jeweiligen Container 14 enthalten ist und für welchen Drucker 18 der in dem jeweiligen Container 14 enthaltene Ausgangsstoff bestimmt ist. Der Werker, der bei einem bestimmten Drucker 18 einen Ausgangsstoff ergänzen will, muss aber gegebenenfalls erst nach Container(n) 14 suchen, welche das gesuchte Material - gegebenenfalls mit einem Chargenbezug - beinhalten.

Die Datenbasis 20 umfasst die oben genannten Informationen zu allen im Rahmen des Prozesses 12 verwendeten Containern 14 und darunter vor allem die in jedem Container 14 enthaltene Menge des jeweiligen Ausgangsstoffs. Das Prozessbild 10 stellt die in der Datenbasis 20 vorgehaltenen Daten oder zumindest einzelne dort verfügbare Daten dar, zum Beispiel einzelne der vorgenannten Daten sowie für jeden Container 14 eine Information zu dessen Standort/Lagerort. Über die Kommunikationsschnittstelle 16 des SCADA-Systems 22 (zumindest einen Kommunikationskanal des SCADA-Systems 22) sind die Datenbasis 20, der Prozess 12 und davon umfasste Einheiten (Container 14, Drucker 18) und graphische Elemente im Prozessbild 10 in grundsätzlich an sich bekannter Art und Weise kommunikativ miteinander verbunden. Dabei sind bezüglich der Container 14 zwei Situationen zu unterschieden. In einer ersten Situation haben die Container 14 keine Intelligenz und keine Schnittstelle. Dann werden die Daten in der Datenbasis 20 gehalten und manuell mit den Containern 14 abgeglichen. In einer zweiten Situation bieten die Container 14 einen Kommunikationskanal (Kommunikationsschnittstelle 16) und weisen einen Speicher auf. In diesem Fall können sie direkt mit dem SCADA-System 22 kommunizieren. Wenn die Verbindung nur temporär besteht (zum Beispiel mittels eines zentralen RFID-Readers) sind die Daten zusätzlich in der Datenbasis 20 zu speichern.

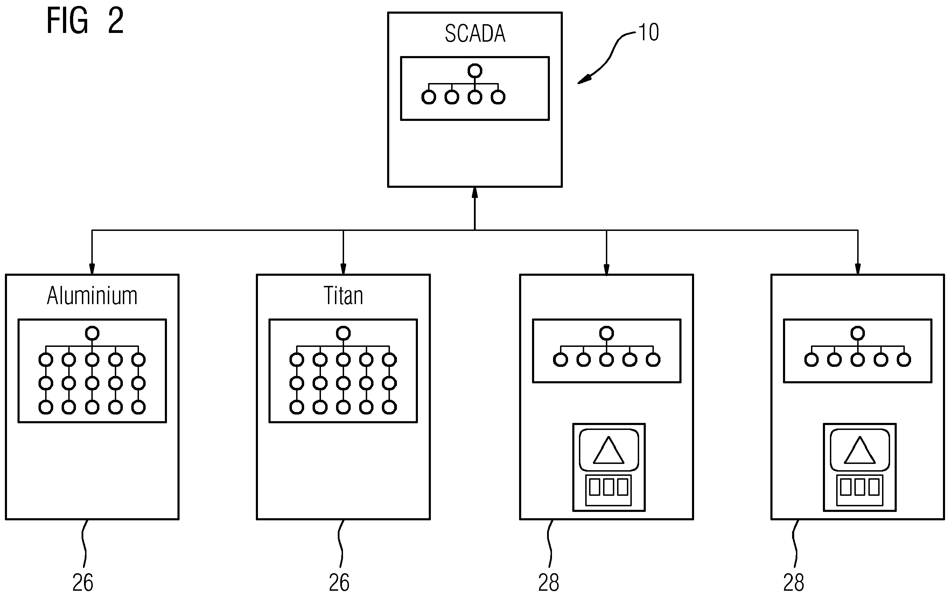

Bei diesen graphischen Elementen handelt es sich zum Beispiel um eine graphische Darstellung eines Containers 14, also einen graphischen Repräsentanten 24 eines Containers 14, eine graphische Darstellung eines im Rahmen des Produktionsprozesses 12 verwendeten Ausgangsstoffs, also einen graphischen Repräsentanten 26 (FIG 2) des jeweiligen Ausgangsstoffs, und/oder eine graphische Darstellung eines im Rahmen des Produktionsprozesses 12 verwendeten Druckers 18, also einen graphischen Repräsentanten 28 (FIG 2) eines Druckers 18.

Während des Prozesses 12 erfolgt in grundsätzlich an sich bekannter Art und Weise eine Aufnahme von Messwerten im Prozess 12. Dabei wird zum Beispiel mittels einer von einem Drucker 18 umfassten Sensorik in grundsätzlich an sich bekannter Art und Weise der Füllstand eines Reservoirs für einen von dem Drucker 18 verarbeiteten Ausgangsstoff überwacht. Ein den Füllstand kodierender Zahlenwert wird entsprechend der Funktionalität des SCADA-Systems 22 und damit in grundsätzlich an sich bekannter Art und Weise in die Datenbasis 20 übernommen. Auf Basis dieses Datums kann - in ebenfalls grundsätzlich an sich bekannter Art und Weise (mittels des SCADA-Systems 22) - innerhalb des Prozessbilds 10 eine Visualisierung dieses Füllstands erfolgen. Indem diese Visualisierung (durch ein entsprechendes Anlegen des Prozessbilds 10) dem graphischen Repräsentanten 28 desjenigen Druckers 18, für den der Füllstandswert ursprünglich aufgenommen wurde, zugeordnet wird, ist in dem Prozessbild 10 unmittelbar der Füllstand des jeweiligen Reservoirs des Druckers 18 erkennbar.

FIG 2 zeigt digitale Repräsentanten 28 zweier in einem (grundsätzlich beliebigen) Prozess/Druck-Prozess 12 (FIG 1) verwendeter Drucker 18 (FIG 1) und digitale Repräsentanten 26 zweier im Prozess 12 verwendeter Ausgangsstoffe, nämlich Aluminium und Titanium. Die Ausgangsstoffe werden in einer bestimmten Anzahl von Containern 14 vorgehalten. Das Prozessbild 10 umfasst die Informationen über die Anzahl und den Ort der jeweiligen Container 14. Jedem Repräsentanten 26, 28 kann mittelbar oder unmittelbar ein Teil des Prozessbilds 10 zugeordnet sein, wie dies in der Darstellung in FIG 2 schematisch vereinfacht angedeutet ist. Insofern ist zum Beispiel jedem Repräsentanten 28 eines Druckers 18 der für diesen Drucker 18 relevante Teil des Prozessbilds 10 zugeordnet, nämlich die für diesen Drucker 18 bestimmten Container 14. Ebenso sind zum Beispiel jedem Repräsentanten 26 eines Ausgangsstoffs aus dem Prozessbild 10 die Container 14 mit dem jeweiligen Ausgangsstoff zugeordnet.

Jeder graphische Repräsentant 24, 26, 28 ist - in grundsätzlich an sich bekannter Art und Weise und im Rahmen der Datenhaltung in einem SCADA-System 22 - mit einem Datenobjekt in der Datenbasis 20 verknüpft. Diese Datenobjekte sind ihrerseits mit sogenannten Datenpunkten im jeweiligen Prozess 12 verknüpft. Auf diese Weise ist zum Beispiel ein Sensor zur Erfassung eines Füllstands eines Reservoirs eines Druckers 18 mit einem solchen Datenobjekt und damit zumindest mittelbar mit dem graphischen Repräsentanten 28 dieses Druckers 18 verknüpft. Bei einer Füllstandsänderung führt dies zu einer Änderung eines entsprechenden Datums in der Datenbasis 20, nämlich einem dortigen jeweiligen Datenobjekt, und die Datenänderung wirkt sich gegebenenfalls auch auf eine Darstellung des graphischen Repräsentanten 28 aus (wenn dort eine Darstellung des Füllstands vorgesehen ist). Dann kann der Füllstand direkt anhand der Visualisierung des Druckers 18 in Form des graphischen Repräsentanten 28 abgelesen werden. Mittels einer über die Kommunikationsschnittstelle 16 abgewickelten Übertragung von Daten zwischen solchen Datenpunkten im Prozess 12, Datenobjekten in der Datenbasis 20 und graphischen Repräsentanten 24, 26, 28 im Prozessbild 10 wird zum Beispiel ein Verbrauch eines Ausgangsstoffs erfasst und eine Konsistenz zwischen den Daten in der Datenbasis 20 und dem Prozessbild 10 gewährleistet. Wenn zum Beispiel ein Drucker 18 mittels dessen (grundsätzlich an sich bekannter) Sensorik einen im Rahmen des Produktionsprozesses leer gewordenen Container 14 meldet, wird ein entsprechendes Sensorsignal durch das SCADA-System 22 ausgewertet und findet direkt Eingang in die Datenbasis 20 und von dort in das Prozessbild 10. Diese Aktualisierung des Prozessbilds 10 gewährleistet eine jederzeitige Aktualität der Datenbasis 20 und eine Aktualität einer Visualisierung des Prozesses 12 in Form des oder eines Prozessbilds 10. Das Prozessbild 10 zeigt dem Werker den leer gewordenen Container 14 und den davon betroffenen Drucker 18. Der Werker kann somit unmittelbar eingreifen und den leer gewordenen Container 14 ersetzen.

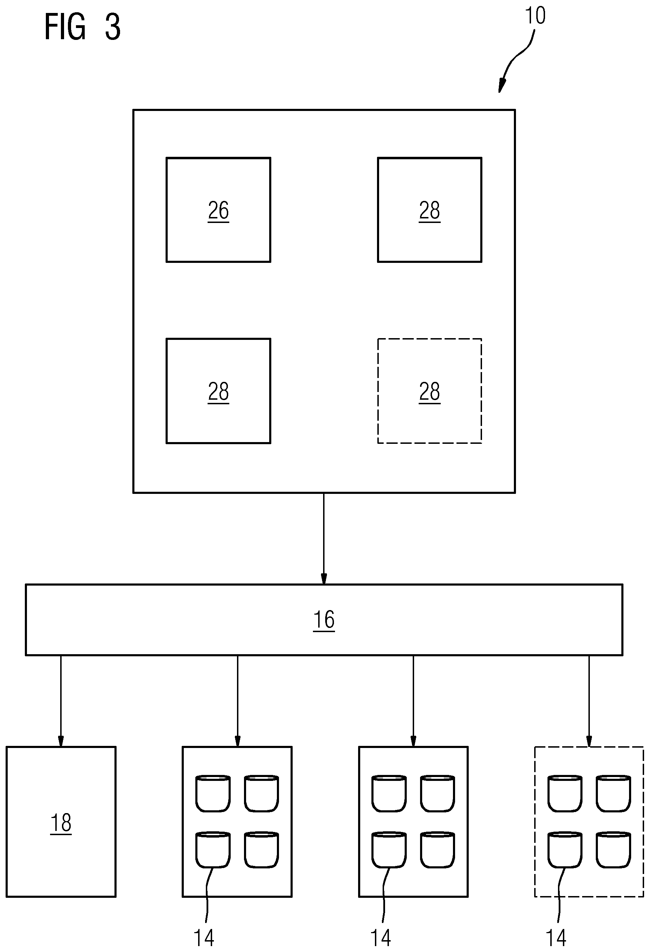

Aktuelle SCADA-Systeme 22 erlauben die Erstellung und Verwendung mehrerer Prozessbilder 10. So kann zum Beispiel neben einem gewissermaßen zentralen Prozessbild 10, wie dies schematisch vereinfacht in FIG 1 gezeigt ist, für jeden Drucker 18 ein eigenes Prozessbild 10 erzeugt werden (ein solches Prozessbild 10 umfasst eine Untermenge der Daten des Prozessbilds 10 für den Gesamtprozess 12). Dies ist auf Basis von FIG 2 schematisch vereinfacht in FIG 3 gezeigt. Dort sind einem einzelnen Drucker 18 (dessen Repräsentanten 28) verschiedene für einen mit diesem Drucker 18 auszuführenden Druckprozess relevante Ausgangsstoffe (deren Repräsentanten 26) zugeordnet. Wenn im Rahmen des Prozesses 12 ein Container 14 benutzt wird und im Zuge dessen eine Änderung des Standorts dieses Containers 14 stattfindet, geht dies in die Datenbasis 20 ein und zieht eine entsprechende Änderung im Prozessbild 10 nach sich, zum Beispiel indem das Prozessbild 10 den neuen Standort des jeweiligen Containers 14 angibt oder anzeigt (zum Beispiel textuell oder durch eine neue Position innerhalb des Prozessbilds 10). Wenn ein Container 14 benutzt wird und im Zuge dessen leer wird, wird im Prozessbild 10 ebenfalls eine entsprechende Datenänderung berücksichtigt und das Prozessbild 10 umfasst zumindest den neuen Status ("leer") des Containers 14 und/oder ein aktuelles Füll- und/oder Taragewicht und/oder eine graphische Darstellung des Füllstands.

Ein mit einer Überwachung des Produktionsprozesses 12 betrauter Werker erkennt bei einem Blick auf das Prozessbild 10, also bei einem Blick auf eine dortige Visualisierung des Prozesses 12 oder eines Teilaspekts des Prozesses 12, demnach zum Beispiel wenn ein Container 14 leer wird und er erkennt weiterhin, welcher Ausgangsstoff in dem leer gewordenen Container 14 enthalten war. Mit der Information über den jeweiligen Ausgangsstoff ist für den Werker anhand des Prozessbilds 10 auch erkennbar, wo Container 14 mit diesem Ausgangsstoff vorgehalten werden und der Werker kann sich von dort einen neuen Container 14 zum Ersatz des leer gewordenen Containers 14 beschaffen. Dies gewährleistet, dass der Drucker 18 nur mit genau dem Ausgangsstoff beschickt wird, der für diesen Drucker 18 und/oder den jeweiligen Produktionsprozess (Druckjob) 12 vorgesehen ist. Dies gewährleistet weiterhin, dass für den auf diesem Drucker 18 ablaufenden Produktionsprozess 12 nur ein Container 14 aus genau derjenigen Menge von Containern 14 verwendet wird, die für diesen Drucker 18 bestimmt sind.

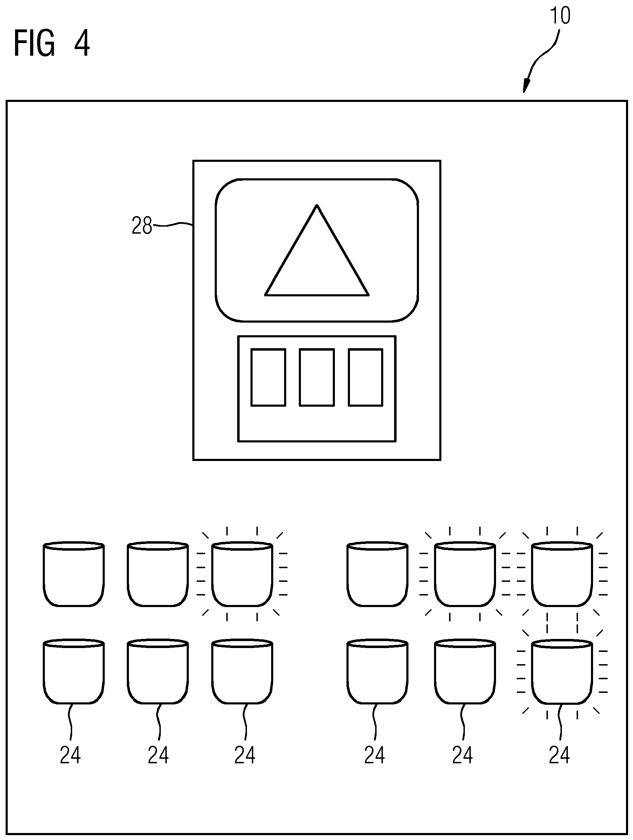

In FIG 4 ist das zuvor skizzierte Anwendungsbeispiel des hier vorgeschlagenen Ansatzes mit einem zusätzlichen Detail schematisch vereinfacht gezeigt. Das Prozessbild 10 umfasst eine Darstellung eines Druckers 18 (das SCADA-System 22 zeigt den Repräsentanten 28) und eine Darstellung mehrerer Lagerstätten mit jeweils einzelnen Containern 14 (das SCADA-System 22 zeigt die Repräsentanten 24). Die Darstellung des Druckers 18 umfasst zum Beispiel eine piktographische Darstellung eines mittels des Druckers 18 gefertigten Werkstücks (hier in Form eines schiefen Dreiecks gezeigt) sowie eine Darstellung mehrerer von dem Drucker 18 umfasster Reservoirs (jeweils in Form eines Rechtecks gezeigt).

Über Funktionen des Materialmanagements wird eine Anzahl von Containern 14 für einen mittels des Druckers 18 auszuführenden Druckjob reserviert. Die Verwendung der Container 14 erfolgt zu Beginn des Druckjobs. Die für den Druckjob benötigten Materialmengen werden für eine solche Reservierung vorher errechnet. Reservierte Container 14 werden zum Beispiel graphisch hervorgehoben darstellt. Für eine solche graphisch hervorgehobene Darstellung kommen eine ganz oder teilweise blinkende Darstellung, ein Farbumschlag oder dergleichen in Betracht. Dadurch erkennt der Werker unmittelbar, welcher Container 14 dem Drucker 18 und dem mittels des Druckers 18 auszuführenden Druckjob zugeordnet ist. Das SCADA-System 22, welches das Prozessbild 10 zeigt, verfügt mit den Daten in der Datenbasis 20 über Daten zum Drucker 18 sowie über Daten zu den einzelnen Containern 14, also zum Beispiel in Form einer den Füllstand eines Containers 14 kodierenden Mengeninformation und/oder einer einen Zustand (zum Beispiel "voll", "leer") eines Containers 14 kodierenden Zustandsinformation. Das SCADA-System 22 ist dazu bestimmt und eingerichtet, solche Daten auszuwerten und das mittels des SCADA-Systems 22 implementierte Materialmanagement stellt Funktionen zum Umbuchen von Material zur Verfügung (zum Beispiel aus einem Container 14 oder mehreren Containern 14 in einen anderen Container 14 oder in ein Reservoir eines Druckers 18.

Aufgrund einer mittels des SCADA-Systems 22 detektierten Änderung einer Mengen- oder Zustandsinformation kann als Folgedarstellung 30 anstelle eines bisher angezeigten Prozessbilds 10 die Anzeige eines neuen Prozessbilds 10 erfolgen, nämlich eines in dem SCADA-System 22 mit dem bisherigen Prozessbild 10 und der überwachten Mengen- oder Zustandsinformation verknüpftes Prozessbild 10.

Wenn - wie gezeigt - mehrere Container 14 für einen Druckjob reserviert sind, sind diese in der Datenhaltung des SCADA-Systems 22 zum Beispiel in einer Liste angeordnet, welche eine vorgesehene Verwendungsreihenfolge kodiert. Dann wird dem Werker (in der Folgedarstellung 30) genau derjenige Container 14 graphisch hervorgehoben angezeigt, dessen Inhalt als nächstes verwendet werden soll. Dieses Anwendungsbeispiel veranschaulicht die nach dem hier vorgeschlagenen Ansatz vorgesehene und mögliche Werkerführung. Selbstverständlich sind entsprechend dieses Anwendungsbeispiels verschiedene weitere Prozessbilder 10 mit spezifischen Darstellungen eines jeweiligen Prozesses 12 oder eines Teils des Prozesses 12 und darin enthaltenen Verknüpfungen denkbar.

Entsprechend ist darauf hinzuweisen, dass anhand der von der Datenbasis 20 umfassten Informationen, zum Beispiel Informationen, welche und wie viele Drucker 18 zur Verfügung stehen, unterschiedliche Prozessbilder 10 zur Visualisierung des Prozesses 12 oder einzelner Aspekte des Prozesses 12 angelegt werden können. Diese Möglichkeit ist für sich genommen an sich bekannt. Hier wird diese Möglichkeit dafür genutzt, um einem für den Produktionsprozess 12 verantwortlichen Werker Handlungsanweisungen zu geben (Werkerführung). Insoweit kann zum Beispiel bei einer Aktivierung eines Prozessbilds 10 zur Visualisierung genau eines Druckers 18 angezeigt werden, welche und wie viele Container 14 diesem zugeordnet sind.

In FIG 3 ist die Kommunikationsschnittstelle 16 als Schnittstelle zwischen dem Prozessbild 10 und den realen physikalischen Elementen des Prozesses 12 und im Prozess 12, also zumindest einem Drucker 18 und zumindest einem Container 14, gezeigt. Die Kommunikationsschnittstelle 16 entkoppelt das Prozessbild 10 von solchen Elementen und fungiert damit als Abstraktionsschicht (abstraction layer) zum Prozess 12. Der Abgleich der Daten des Prozessbilds 10 mit der Datenbasis 20 ist in FIG 3 nicht gezeigt. Insoweit wird auf FIG 1 verwiesen.

Das oder jedes Prozessbild 10 fungiert als der zentrale Anknüpfungspunkt für das Materialmanagement des jeweiligen Prozesses 12. Bei einer geeigneten Verknüpfung - mit für sich genommen grundsätzlich an sich bekannten Mitteln des SCADA-Systems 22 - der Datenpunkte im Prozess 12 mit Datenobjekten in der Datenbasis 20 und einer Darstellung der insoweit bezüglich eines Materialverbrauchs und eines Materialstands im Prozess 12 verfügbaren Daten in Form zumindest eines Prozessbilds 10 umfasst das oder jedes Prozessbild 10 die für das Materialmanagement notwendigen Informationen.

Einzelne Prozessbilder 10 können zum Beispiel für genau einen Druckertyp vom Hersteller des jeweiligen Druckers 18 angelegt und zur Verwendung mit einem SCADA-System 22 zur Verfügung gestellt werden. Ein solches Prozessbild 10 berücksichtigt Datenpunkte eines dem jeweiligen Druckertyp entsprechenden Druckers 18. Das resultierende Prozessbild 10 berücksichtigt zum Beispiel, dass Drucker 18 des jeweiligen Druckertyps genau ein Reservoir für genau einen Ausgangsstoff (oder ein erstes Reservoir für einen ersten Ausgangsstoff und ein zweites Reservoir für den ersten Ausgangsstoff oder einen weiteren Ausgangsstoff usw.) sowie genau ein Reservoir (oder ein erstes und ein zweites Reservoir usw.) zur Aufnahme von beim Prozess 12 anfallendem Überschuss (überschüssiger Ausgangsstoff/überschüssige Ausgangsstoffe) aufweisen. Das resultierende Prozessbild 10 umfasst eine zu dem jeweiligen Druckertyp passende Darstellung.

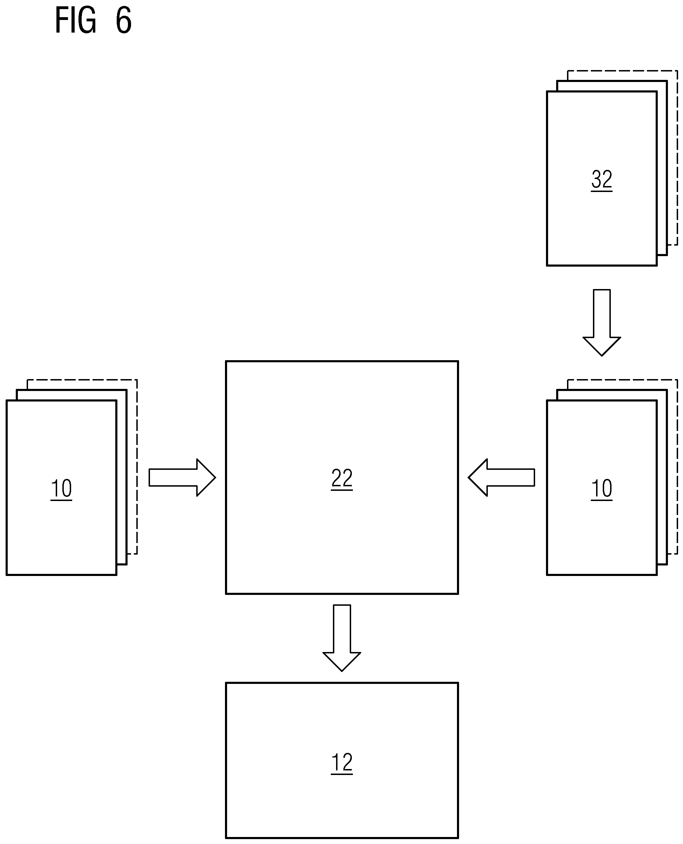

Ein von einem Druckerhersteller oder in sonstiger Weise zur Verfügung gestelltes Prozessbild 10 ist bezogen auf einen Druckertyp und kann für verschiedenen Instanzen (Drucker 18 oder andere Geräte) einheitlich verwendet werden. Im Falle der Verwendung für mehrere Geräteinstanzen erfolgt eine Zuordnung der Prozessbilder 10 über eine zentrale Identifikation des Druckers 18. Alle Schnittstellen zu den Geräten (zum Beispiel Temperaturdaten) werden dann automatisch aufgebaut. FIG 6 veranschaulicht, dass solche Prozessbilder 10 als Basis für ein wiederverwendbares Dialogelement 32 zur Verwendung in einem konkreten Automatisierungsprojekt in Betracht kommen. Das Automatisierungsprojekt umfasst zum Beispiel drei Drucker 18 verschiedener Druckertypen. Wenn für jeden Druckertyp bereits zumindest ein zum Beispiel vom Druckerhersteller bereitgestelltes Prozessbild 10 (Dialogelement 32) der oben skizziert Art existiert, kann jedes derartige Prozessbild 10 unmittelbar im Rahmen des Automatisierungsprojekts zur Automatisierung des diese drei Drucker 18 umfassenden Prozesses 12 zusammen mit einem bei der Automatisierung des Prozesses 12 zum Einsatz kommenden SCADA-System 22 verwendet werden. FIG 6 zeigt oben rechts einzelne als Dialogelemente 32 zur Verfügung stehende Prozessbilder 10, die von einem Automatisierungsingenieur als Prozessbilder 10 übernommen werden. Gegebenenfalls müssen dabei im Rahmen der Automatisierung des Prozesses 12 durch den Automatisierungsingenieur noch zusätzliche Prozessbilder 10 erstellt (in FIG 6 auf der linken Seite gezeigt) und/oder Verbindungen der den Prozessbildern 10 zugrunde liegenden Daten mit Datenpunkten im Prozess 12 hergestellt werden. Dabei wird ein auf einem solchen Dialogelement 32 basierendes Prozessbild 10 oder auch jedes individuell für den konkreten Prozess 12 erstellte Prozessbild 10 in grundsätzlich an sich bekannter Art und Weise mit den konkreten Datenpunkten des jeweiligen Prozesses 12 und/oder Druckers 18 verbunden. Die noch erforderliche Anpassung an den konkreten Prozess 12 ist jedenfalls deutlich weniger aufwändig als jeweils eine Neuerstellung zumindest eines Prozessbilds 10 für jeden Drucker 18 bei jedem neuen Automatisierungsprojekt. Das oder jedes Prozessbild 10 wird in grundsätzlich an sich bekannter Art und Weise von einem ebenfalls grundsätzlich an sich bekannten SCADA-System 22 bei der Automatisierung des jeweiligen Prozesses 12 verwendet, also insbesondere angezeigt und im angezeigten Zustand regelmäßig aktualisiert.

Prozessbilder 10 der hier vorgeschlagenen Art - gleich ob diese als Dialogelement 32 für einen Gerätetyp, insbesondere einen Druckertyp, oder individuell für einen konkreten Prozess 12 entstehen - können als Handlungsanweisungen für im Rahmen eines konkreten Produktionsprozesses 12 verantwortliche Werker fungieren, zum Beispiel indem ein Prozessbild 10 genau einen Drucker 18 und das oder jedes davon umfasste Reservoir darstellt, so dass der Werker die Füllstandssituation des Druckers 18 erkennen kann. Im Falle einer - mittels grundsätzlich an sich bekannter Funktionen eines SCADA-Systems 22 automatisch erkennbaren - Über- oder Unterschreitung eines Füllstandsgrenzwerts kann manuell oder automatisch, insbesondere automatisch im Rahmen der Funktion des SCADA-Systems 22, auf ein anderes Prozessbild 10 umgeschaltet werden (die beiden Prozessbilder 10 sind dafür innerhalb des SCADA-Systems 22 in grundsätzlich an sich bekannter Art und Weise geeignet miteinander verknüpft). Insoweit kann bei einer Unterschreitung eines Füllstandsgrenzwerts in Bezug auf ein zur Aufnahme eines Ausgangsstoffs bestimmtes Reservoir des Druckers 18 auf ein Prozessbild 10 umgeschaltet werden, welches zum Beispiel einerseits das Reservoir zeigt, den dort zugeführten Ausgangsstoff benennt und zumindest einen für diesen Drucker 18 bestimmten Container 14 mit demselben Ausgangsstoff anzeigt und dort zumindest dessen Kennzeichnung sowie dessen Standort/Lagerort benennt (zum Beispiel in einer Art und Weise wie dies in FIG 4 gezeigt ist). Der Werker erkennt also unmittelbar, welches Reservoir neu mit einem jeweiligen Ausgangsstoff zu beschicken ist, welcher Container 14 dafür zu verwenden ist und wo sich dieser Container 14 befindet.

Auf entsprechende Art und Weise sind weitere Handlungsanweisungen mittels weiterer Prozessbilder 10 realisierbar. Für Prozessbilder 10, die bereits auf Seiten eines Geräteherstellers entstehen, insbesondere durch einen Druckerhersteller, kann der jeweilige Hersteller in dem oder jedem für den Gerätetyp, insbesondere Druckertyp, erstellten Prozessbild 10 nicht nur eine Anzeige sensorisch erfassbarer Prozessdaten, sondern auch zumindest eine Handlungsanweisung vorsehen, welche an ein bei einem Gerät des jeweiligen Gerätetyps aufnehmbares Datum anknüpft, zum Beispiel einen Füllstandsmesswert (siehe oben).

Ein Prozessbild 10 kann zum Beispiel auch auf einem von dem Werker mitführbaren Gerät, zum Beispiel einem Tablet-Computer, angezeigt werden. Dieses Gerät umfasst zum Beispiel einen Scanner oder dergleichen oder ist kommunikativ mit einem Scanner oder dergleichen verbunden. Der Scanner ist dann ein Datenpunkt innerhalb des SCADA-Systems 22 und mittels des Scanners wird zum Beispiel die Kennzeichnung eines Containers 14 erfasst. Auf eine solche Erfassung wird dem Werker zum Beispiel auf seinem Gerät im Rahmen eines entsprechenden Prozessbilds 10 angezeigt, ob der gescannte Container 14 zur Ergänzung eines bei einem Drucker 18 zur Neige gehenden Ausgangsstoffs geeignet ist oder nicht.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Bei einer Erstellung einer Automatisierungslösung zur Automatisierung eines konkreten technischen Prozesses 12, zum Beispiel einem Prozess 12 mit einem oder mehreren Druckern 18, insbesondere zumindest einem Drucker 18 zum selektiven Laserschmelzen (SLM) oder zum selektiven Lasersintern oder mehreren solchen Druckern 18, wird zur Visualisierung des Prozesses 12 sowie zum Bedienen und Beobachten des Prozesses 12 ein grundsätzlich an sich bekanntes SCADA-System 22 verwendet. Das SCADA-System 22 verwendet seinerseits zumindest ein Prozessbild 10. Das oder zumindest ein Prozessbild 10 basiert zum Beispiel auf einem von einem Gerätehersteller erstellten Prozessbild 10. Ein für die Automatisierung des konkreten Prozesses 12 verantwortlicher Ingenieur nimmt die notwendigen Verknüpfungen jedes in dieser Form extern zur Verfügung gestellten Prozessbilds 10 mit Datenpunkten im Prozess 12 vor und erstellt - in grundsätzlich an sich bekannter Art und Weise - gegebenenfalls weitere Prozessbilder 10. Die resultierende Gesamtheit von Prozessbildern 10 visualisiert den konkreten Prozess 12, erlaubt ein Bedienen und Beobachten des konkreten Prozesses 12 und umfasst in der oben skizzierten Art und Weise Handlungsanweisungen für einen beim Ablauf des Prozesses 12 für diesen verantwortlichen Werker.

Komfortablerweise kann eine solche Werkerführung für die Drucker 18 zentrale Funktionen des Materialmanagements einbinden, um zum Beispiel Container 14 mit einer vorgegebenen Charge eines Materials zu finden, so dass die Werkerführung sich auf Besonderheiten des jeweiligen Druckertyps (zum Beispiel Einstellungen von Beschichtern) konzentrieren kann.

## Patentansprüche

1. Verfahren für ein automatisiertes Materialmanagement bei einem additiven Produktionsprozess (12),
wobei im Rahmen des Produktionsprozesses (12) Daten bei vom Produktionsprozess (12) umfassten Einheiten (14, 18) erfasst und in einer Datenbasis (20) gespeichert werden,
wobei mittels zumindest eines Prozessbilds (10) zumindest einzelne von dem Produktionsprozess (12) umfasste Einheiten (14, 18) in Form graphischer Repräsentanten (24, 28) dieser Einheiten (14, 18) angezeigt werden und wobei die graphischen Repräsentanten (24, 28) eine Darstellung einer Mengen- und/oder Zustandsinformation umfassen,
**dadurch gekennzeichnet,**
**dass** die Erfassung der Daten und die Darstellung des oder jedes Prozessbilds (10) mittels eines SCADA-Systems (22) erfolgt.

2. Verfahren nach Anspruch 1,
mit einer an eine Änderung einer Mengeninformation und/oder eine Änderung einer Zustandsinformation anknüpfenden Folgedarstellung (30) in dem Prozessbild (10) oder einem als Folgedarstellung (30) fungierenden weiteren Prozessbild (10).

3. Verfahren nach Anspruch 1 oder 2,
wobei eine Kommunikationsschnittstelle (16) des SCADA-Systems (22) als Abstraktionsschicht zwischen dem Materialmanagement und dem jeweiligen Produktionsprozess (12) fungiert.

4. Verwendung eines SCADA-Systems (22) als Basis für eine Erfassung von für ein Materialmanagement eines Produktionsprozesses (12) relevanten Daten und als Basis für eine Darstellung dieser Daten in Form von zumindest einem Prozessbild (10) .

5. Verfahren zum Erstellen einer Automatisierungslösung für einen Produktionsprozess (12),
wobei für zumindest eine von dem Produktionsprozess (12) umfasste Einheit (14, 18) ein Dialogelement (32) als Basis für ein Prozessbild (10) zur Darstellung dieser Einheit (14, 18) zur Verfügung steht,
wobei ein mit dem Erstellen der Automatisierungslösung betrauter Automatisierungsingenieur das Dialogelement (32) als Prozessbild für eine Darstellung der jeweiligen Einheit (14, 18) im Rahmen des Produktionsprozesses (12) in ein SCADA-System (22) übernimmt und das Prozessbild (10) in dem SCADA-System (22) mit Datenpunkten des Produktionsprozesses (12) verknüpft.

6. Verwendung eines von einem Gerätehersteller erhältlichen Prozessbilds (10) einer technischen Einheit (14, 18) als Dialogelement (32) in einem Verfahren nach Anspruch 4.
